# EUROPÄISCHE PATENTANMELDUNG

(11) **EP 1 078 691 A1**
(43) Veröffentlichungstag der Anmeldung: **28.02.2001**
(21) Anmeldenummer: 00890251.2
(22) Anmeldetag: 16.08.2000
(51) Int. Cl.: B01L 3/14

(54) **Verwendung von Kunststoffrohlingen der Kunstoffflaschenherstellung als Transportbehältnisse**

(30) Priorität: 27.08.1999 AT 148299
(71) Anmelder: Karl Pawel Verpackungsunternehmen, 1100 Wien (AT)
(72) Erfinder: Pawel, Karl, 1100 Wien (AT)
(74) Vertreter: Itze, Peter, Dipl.-Ing.

(57) **Zusammenfassung**

Die Erfindung betrifft die Verwendung von mit bereits angeformtem Gewindestutzen (2) versehenen Kunststoffrohlingen (1) für die Herstellung von geblasenen Kunststoffflaschen, als Transport- bzw. Versandbehältnis von, z.B. in Proberöhren enthaltenen, gefährlichen, insbesondere infektiösen, Gütern.

## Beschreibung

Die Erfindung bezieht sich auf eine Verwendung von Kunststoffrohlingen der Kunststoffflaschenherstellung als Transportbehältnisse.

Beim Transport insbesondere beim Versand von gefährlichen, bzw. insbesondere infektiösen Gütern wie Blutproben oder dgl. muß sichergestellt sein, daß auch im Falle eines Unfalles des Transportfahrzeuges bzw. beim Herabstürzen der Verpackung ein Austreten des gefährlichen Gutes verhindert ist. Dazu sind bisher spezielle Verpackungen entwickelt worden, bei welchen die Proberöhren in einen dichten Behälter einzusetzen sind, welcher dann seinerseits in einem mit stoßabsorbierendem Material gefütterten Überkarton zu verpacken ist. Diese bekannten Behälter sind in der Herstellung und auch in der Handhabung aufwendig, so daß auf Grund der hohen Kosten vielfach das Risiko eines ungeschützten Transportes bzw. Versandes in Kauf genommen wird.

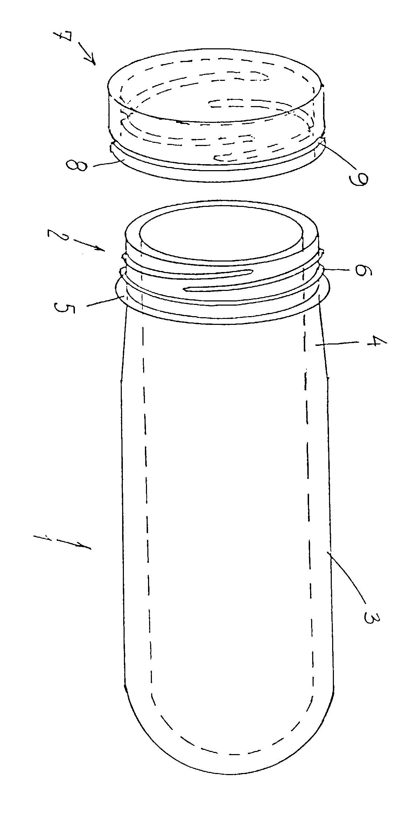

Vorgeformte Rohlinge zum Blasen von Kunststoffflaschen, auch Külblinge genannt, gehen aus der US 4 646 925 A, insbesondere Fig. 2 hervor, wobei in dieser Druckschrift die Herstellung solcher Rohlinge beschrieben ist.

Der Erfindung liegt die Aufgabe zugrunde ein Transportbehältnis für gefährliche, insbesondere infektiöse, Güter zu schaffen, welches ohne zusätzliche Überkartons bzw. umgebendes Stoßdämpfungsmaterial stabil genug ist, um einen zufriedenstellenden Transport- bzw. Versandschutz zu gewährleisten.

Erfindungsgemäß wird diese Aufgabe dadurch gelöst, daß als Transport- bzw. Versandbehältnis ein mit bereits angeformtem Gewindestutzen versehener Kunststoffrohlingen für die Herstellung von geblasenen Kunststoffflaschen verwendet wird. Dies hat den Vorteil, daß das Wandmaterial vor dem Blasen der Flaschen in dem Wandbereich des Rohlings konzentriert ist, so daß dieser im Wandbereich eine hohe Festigkeit aufweist, wobei durch den bereits einstückig angeformten Gewindestützen ein haltbares, dichtes Abschließen mittels einer Verschlußkappe gegeben ist.

Vorteilhafterweise kann die auf den Gewindestutzen aufzuschraubende Verschlußkappe in an sich bekannter Weise mit einer über eine Sollbruchstelle mit ihr verbundenen Originalitätssicherung versehen sein. Dadurch ist es möglich beim Transport bzw. Versand sicherzustellen, daß niemand die gefährlichen Güter während des Transports oder des Versandes manipulieren kann. Im Hinblick auf die Tatsache, daß derartige Verschlußkappen bei Kunstoffflaschen üblich sind, können solche handelsüblichen Verschlüsse mit Vorteil auch für die vorliegende Verwendung eingesetzt werden, wobei auf Grund des ursprünglichen Verwendungszweckes eine zuverlässige Abdichtung der Behälteröffnung gegeben ist.

In der Zeichnung ist ein Ausführungsbeispiel des Erfindungsgegenstandes schaubildlich dargestellt.

Mit 1 ist ein Kunststoffrohling für die Herstellung von geblasenen Kunststoffflaschen bezeichnet, welcher mit einem Gewindestutzen 2 einstückig geformt ist. Dieser Kunstoffrohling weist einen zylindrischen Wandteil 3 auf, der nach dem Blasen den Flaschenkörper bildet und im Rohling das gesamte Material des Flaschenkörpers enthält und demgemäß eine entsprechende Wandstärke und damit eine hohe Festigkeit aufweist. Dieser zylindrische Wandteil 3 ist mit dem Gewindestutzen 2 über einen schwach konischen Wandteil, verbunden, welcher bei der fertigen Flasche den Übergang zwischen Gewindestutzen 2 und Flaschenkörper bildet.

Der Gewindestutzen 2 weist an seinem dem konischen Wandteil 4 zugewanden Ende einen Zentrierring 5 auf, mit welchem der Rohling in der Blasemaschine eingespannt wird. Zwischen dem Zentrierring 5 und den Gewindegängen des Gewindestutzens ist ein umlaufender Wulst 6 angeordnet, der für das Zusammenwirken mit einem an der aufzuschraubenden Verschlußklappe 7 angeordneten Originalitätssicherungsring 8 vorgesehen ist, der mit der Verschlußkappe 7 über eine Sollbruchstelle 9 verbunden ist.

Die für Flaschen mit 1,5 l Fassungsvermögen vorgesehenen Rohlinge können ein herkömmliches Blutprobenröhrchen aufnehmen, die für Flaschen mit 5 l Fassungsvermögen vorgesehenen Rohlinge zwei der Blutprobenröhrchen, wobei in allen Fällen genügend Raum für die Aufnahme des vorgeschriebenen Saugmaterials zum Verhindern eines Ausfließcns vorhanden ist.

## Patentansprüche

1. Verwendung von mit bereits angeformtem Gewindestutzen (2) versehenen Kunststoffrohlingen (1) für die Herstellung von geblasenen Kunststoffflaschen als Transport- bzw. Versandbehältnis von, z.B. in Proberöhren enthaltenen, gefährlichen, insbesondere infektiösen, Gütern.

2. Verwendung nach Anspruch 1, mit der Maßgabe, daß die auf den Gewindestutzen (2) aufzuschraubende Verschlußkappe (7) in an sich bekannter Weise mit einem über eine Sollbruchstelle (9) mit ihr verbundenen Originalitätssicherungsring (8) versehen ist.
